(19) Europäisches Patentamt
European Patent Office
Office européen des brevets

(11) Numéro de publication : **0 001 524**
**B1**

(12) **FASCICULE DE BREVET EUROPÉEN**

(45) Date de publication du fascicule du brevet : **11.08.82**

(51) Int. Cl.³ : **H 01 F 1/11**, C 01 G 37/02, C 01 G 55/00

(21) Numéro de dépôt : **78400109.1**

(22) Date de dépôt : **22.09.78**

# (54) Nouveau matériau ferromagnétique à base de dioxyde de chrome et de dioxyde de rhodium et son obtention.

(30) Priorité : **04.10.77 FR 7729857**
**18.08.78 FR 7824192**

(43) Date de publication de la demande : **18.04.79 (Bulletin 79/08)**

(45) Mention de la délivrance du brevet : **11.08.82 Bulletin 82/32**

(84) Etats contractants désignés : **BE DE GB NL**

(56) Documents cités :
**FR A 1 298 581**
**FR A 2 076 109**
**FR A 2 138 160**
**FR A 2 190 735**
**FR A 2 270 206**

**IBM TECHNICAL DISCLOSURE BULLETIN vol. 12, no. 5, octobre 1969, pages 676-677**

**CHEMICAL ABSTRACTS, vol. 84 (1976) page 606, résumé 188775t, Bayer G, Thermochim. Acta 1976, 15 (22), 213-26**

(73) Titulaire : **ANVAR Agence Nationale de Valorisation de la Recherche**
**13, rue Madeleine Michelis**
**F-92522 Neuilly-sur-Seine (FR)**

(72) Inventeur : **Demazeau, Gérard**
**Martinon Bat,G Rue des Fontaines de Monjous**
**F-33170 Gradignan (FR)**
Inventeur : **Maestro, Patrick**
**30, Avenue Marcellin Berthelot**
**F-33110 Le Bouscat (FR)**
Inventeur : **Plante, Théophile**
**Chemin de la Princesse**
**F-33700 Merignac (FR)**
Inventeur : **Pouchard, Michel**
**Bellegrave Le Poujeau**
**33290 Le Pian-Medoc (FR)**
Inventeur : **Hagenmuller, Paul**
**351, Cours de la Libération**
**F-33405 Talence (FR)**

(74) Mandataire : **Harlé, Robert et al**
**c/o Cabinet Harlé & Phélip 21, rue de la Rochefoucauld**
**F-75009 Paris (FR)**

**EP 0 001 524 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

« Nouveau matériau ferromagnétique à base de dioxyde de chrome et de dioxyde de rhodium et son obtention. »

La présente invention concerne de nouveaux matériaux ferromagnétiques et leur préparation. Elle concerne plus particulièrement un nouveau matériau ferromagnétique à base de dioxyde de chrome et de dioxyde de rhodium, ainsi qu'un procédé pour son obtention et des éléments d'enregistrement magnétique comportant ce matériau comme composant magnétique déposé sur un support approprié.

Le dioxyde de chrome est l'un des composés ferromagnétiques utiles pour une grande variété d'applications. Pour certaines applications, notamment celles où on ne doit relever que de faibles diminutions des caractéristiques magnétiques aux fréquences élevées, il est en particulier nécessaire que le matériau ferromagnétique utilisé possède un champ coercitif élevé.

Le développement des procédés d'enregistrement audio et vidéo a conduit à rechercher des matériaux ferri- ou ferromagnétiques de plus en plus performants. Pour de telles applications, il est nécessaire que les matériaux mis en œuvre présentent un champ coercitif élevé ($H_c > 23{,}9$ kA/m) et un rapport de rémanence $6r/6s \geqslant 0{,}5$ (rapport de l'aimantation rémanente sur l'aimantation à saturation). Aussi, depuis une vingtaine d'années, de nombreuses recherches ont été menées, qui portaient sur le dioxyde de chrome $CrO_2$, et visaient d'une part à mettre au point de nouveaux procédés pour sa préparation susceptibles d'être industrialisés facilement, et d'autre part à améliorer les propriétés physiques et magnétiques de ce $CrO_2$.

Le dioxyde de chrome, de structure rutile, est ferromagnétique à température ordinaire ($T_c \simeq 390$ °K). Les travaux de Shinji Umeki, Seitoku Saitoh et Yasuo Imaoka (IEEE Trans. Magn. 1974, MAG 10 (3) 1965) ont montré que $CrO_2$ présentait effectivement un net avantage sur d'autres matériaux, tels que $\gamma\ Fe_2O_3$, dopé au cobalt, pour l'enregistrement aux fréquences élevées, notamment dans le domaine d'application de la vidéo.

La présente demanderesse a alors fait porter un large effort sur la recherche et la mise au point de méthodes originales de préparation de $CrO_2$.

C'est ainsi que, dans la demande de brevet FR 2.327.198 et dans les deux demandes de certificats d'addition, respectivement 2.366.225 et 2.403.976, qui lui sont rattachées, on a décrit un mode de préparation original de $CrO_2$, avec ses diverses variantes de réalisation possibles, par oxydation de $Cr_2O_3$, en précisant parfaitement le rôle des oxydants sélectionnés et en définissant alors exactement ceux conduisant d'une part aux meilleurs rendements et d'autre part à la morphologie des microcristallites la mieux adaptée à l'application désirée. On a été amené à préciser alors que l'oxydant doit en particulier être exempt de cations métalliques susceptibles de conduire, au cours du processus réactionnel, à la formation de chromates.

Dans le brevet US 3.278.263 également, la préparation de $CrO_2$ avait été décrite, mais la nature des oxydants et le rôle de ceux-ci y avaient été abordés de manière si large que cela ne pouvait pas guider l'homme de l'art vers le choix d'oxydants industriellement utiles, d'autant que deux des trois oxydants effectivement décrits seraient eux-mêmes difficiles à utiliser à l'échelle industrielle, tandis que le troisième, à savoir $CrO_3$, fait que la réaction mise en jeu n'est plus strictement une oxydation : une partie non négligeable du $CrO_2$ final provient en effet de la réduction de l'anhydride chromique. Il faut également remarquer que $CrO_3$ est hygroscopique, ce qui entraîne des difficultés dans la mise en œuvre d'un tel procédé, à l'échelle industrielle notamment.

Les travaux dont la présente invention est un des aboutissements ont alors porté sur la recherche d'éléments capables de modifier la composition du dioxyde de chrome et d'en améliorer, par là même, tant les propriétés physiques que les propriétés magnétiques, et ont conduit à l'élaboration d'un nouveau matériau ferromagnétique. Ces éléments seront dénommés dans la suite du présent contexte, indifféremment, dopants, agents dopants ou agents modificateurs.

C'est ainsi qu'on connaît maintenant des procédés pour la préparation de $CrO_2$ modifié, faisant intervenir en particulier des agents dopants sous la forme d'oxydes. On peut notamment citer à ce propos les brevets US 2.885.365, 2.923.683, 3.117.093, 3.243.260, 3.493.338 et 3.676.217, la DE-OS 2.006.399, la DE-AS 1.467.328, le brevet DE 1.152.932, la demande de brevet NL 64.08.515, le brevet BE 651.612, la demande de brevet FR 2.088.492, et les brevets FR 2.050.481, 2.066.476 et 2.076.199. Cependant, les motivations présidant au choix d'un agent dopant plutôt qu'un autre étaient très mal définies et même certains des résultats annoncés pouvaient paraître contradictoires.

La demanderesse a alors entrepris un important effort de clarification du rôle de dopants en vue de l'obtention de dioxyde de chrome performant ou d'autres matériaux ayant de hautes caractéristiques magnétiques. Ces efforts ont permis d'établir que, pour qu'on ait un champ coercitif $H_c$ élevé et un rapport de rémanence $6r/6s$ élevé, il est nécessaire que les microcristallites du matériau ferromagnétique soient des monodomaines magnétiques, ce qui implique des microcristallites ayant des dimensions de l'ordre du micron environ. De plus, afin de permettre de diminuer le champ démagnétisant d'une part et de faciliter la répartition sur le support magnétisé d'autre part, il est souhaitable que ces microcristallites soient de forme aciculaire. Il est maintenant également établi que le champ coercitif dépend également de l'anisotropie magnétique du matériau.

Or, les multiples dopants proposés selon l'art antérieur répertorié plus haut agissent très différemment selon les cas ; ces agents dopants peuvent agir :

(1) soit comme germes servant à la nucléation de $CrO_2$ au sein d'une source de chrome constituée d'une solution,

(2) soit pour orienter la cristallogenèse du $CrO_2$ et, dans ce cas, les dopants sont associés au sein d'une structure rutile ou trirutile,

(3) soit pour modifier, notamment diminuer, la vitesse de croissance de microcristaux de $CrO_2$,

(4) soit pour modifier le matériau $CrO_2$ par substitution dans la maille d'atomes de chrome par des atomes ou des ions M magnétiquement anisotropes ou générant des interactions magnétiques M-Cr importantes.

Le premier aspect (1) du dopage peut être illustré par la DE-OS 2.063.026, selon laquelle la génération de carbone au sein d'une solution de $CrO_3$ favorise la germination d'un très grand nombre de microcristaux de $CrO_2$.

Le deuxième aspect (2) du dopage se rencontre dans les DE-OS 2.001.383 et 2.124.812 et dans la publication de la demande de brevet JA 73 17 509, avec nucléation et probablement croissance de $CrO_2$ sur des microcristaux isostructuraux de $CrO_2$ (rutile, trirutile, etc...) préexistants au sein de la solution. Le procédé de la DE-OS 2.124.812, qui est le document de priorité de la demande de brevet FR 2.138.160, correspond à une croissance épitaxiale de $CrO_2$ sur un composé $A_2TeO_6$ (avec A = Cr, Fe, Al, Ga ou Mn).

Le troisième aspect (3) peut être illustré par le cas du dopage par le soufre, élément bien connu pour diminuer les vitesses de croissance des monocristaux.

Le quatrième aspect (4) peut être illustré par le cas du dopage au fer, où, selon E. HIROTA (Japan. Journal of Applied Physics 9, 6, 1970, p. 647), seulement 6 % du fer peut entrer dans la maille. Les dopages par le fer, l'antimoine, le tellure et l'étain ont été étudiés de manière approfondie par T. MIHARA et al. (Ferrites Proceedings of the International Conference July 1970, Japan).

Les diagrammes de phases de la page 478 de ce document montrent clairement que ce n'est que dans les cas du fer et de l'étain qu'on peut observer des solutions solides $Cr_{1-x}Fe_xO_2$ et $Sn_{1-x}Cr_xO_2$. La première solution solide a pour composition limite $Cr_{0,94}Fe_{0,06}O_2$ ; la seconde est riche en étain ($x > 2/3$), donc probablement pas ferromagnétique. Dans le cas de l'antimoine, il ne se forme aucune solution solide, ou, selon certains auteurs, une solution solide très restreinte, et c'est la formation de $CrSbO_4$ de structure rutile qui orienterait la cristallogenèse des particules de $CrO_2$.

De manière identique, B. KUBOTA et al. (Journal of the American Ceramic Society, *46*, 11, 1963, p. 550) ont montré (pages 554 et 555) que le tellure n'entrait pas dans la maille de $CrO_2$. En revanche, la conformation et la taille des particules de $CrO_2$ varient avec le pourcentage de tellure ajouté (voir figure 3 de ce document).

Egalement, dans IBM Technical Disclosure Bulletin, Vol. 12, n° 5, octobre 1969, pp. 676-677, on trouve décrite la préparation de $CrO_2$, par décomposition à chaud, sous pression et dans des conditions oxydantes, de chromate ou de bichromate d'ammonium. Il est seulement indiqué, de manière vague et sans aucun exemple illustrant cette affirmation, que le $CrO_2$ formé pourrait être modifié ou dopé. De plus, le $CrO_2$ ainsi formé est toujours impur, puisqu'un résidu l'accompagne.

En fait, certains dopants sont seulement aptes à favoriser la formation du plus grand nombre de germes de $CrO_2$ à un instant donné et, pour ceux-là, la transformation de la source de chrome en $CrO_2$ doit donc se faire en solution. Le plus souvent, c'en sont d'autres qui peuvent favoriser la formation d'aiguilles (ou particules aciculaires) et/ou augmenter l'anisotropie magnétique. Cela est si vrai que les travaux qui ont fait suite aux premiers visant à modifier les caractéristiques du dioxyde de chrome par adjonction d'agents modificateurs uniques ont porté sur des combinaisons plus ou moins sophistiquées d'agents modificateurs, qualifiés alors pour les uns de primaires et pour les autres de secondaires.

En outre, ces agents dopants doivent être introduits la plupart du temps sous forme d'oxydes dans des procédés qui, tous, consistent à traiter à chaud, sous pression et en présence d'eau, un composé oxygéné du chrome à une valence supérieure à IV, donc dans des conditions peu oxydantes.

On s'explique donc que le rhodium ne figurait pas, et pouvait difficilement figurer, parmi ces agents modificateurs de l'art antérieur, car le dioxyde de rhodium $RhO_2$ pur, qui n'est d'ailleurs isolé et connu que depuis peu de temps, ne se prépare pas ou avec difficulté à pression ordinaire ; il n'a pu être obtenu récemment que sous pression d'oxygène [voir O. MULLER et R. ROY, Journal of the Less Common Metals. 1968-*16*. p. 129-146] ou par décomposition du nitrate ou de l'hydroxyde de rhodium sous pression normale à une température n'excédant pas 450-600 °C [voir Thermochim. Acta (1976), 15(2), 213-226].

On trouve seulement mention du rhodium dans le brevet US 3.022.186 et dans la publication de demande de brevet JA 74.00.199 ; mais le rhodium intervient alors au degré + III et est associé avec un autre métal M tel que Sb, Nb, Ta ou V, lui-même au degré + V, considéré dans ce cas comme élément dopant principal de $CrO_2$ ; il forme des germes de structure rutile et de formule $RhMO_4$, qui servent en fait à favoriser la nucléation des microcristallites de $CrO_2$.

Or, on a maintenant trouvé, selon l'invention, que le rhodium est un agent dopant tout particulièrement avantageux pour le $CrO_2$ et forme avec celui-ci une solution solide continue, et que le nouveau composé ferromagnétique à base de dioxyde de chrome et de dioxyde de rhodium préparé par le procédé selon l'invention présente des propriétés magnétiques améliorées, tant par rapport à du $CrO_2$ pur que par rapport à du $CrO_2$ auquel est ajouté un autre agent dopant que le rhodium. On a également trouvé que le nouveau composé selon l'invention peut aussi être dopé par d'autres agents modificateurs classiques et/ou avantageusement par au moins un agent dopant complémentaire agissant comme tampon du

milieu réactionnel, et présenter ainsi des propriétés magnétiques encore améliorées.

L'invention a pour premier objet un procédé pour l'obtention d'un composé ferromagnétique à base de dioxyde de chrome et de dioxyde de rhodium sous la forme d'une solution solide $Cr_{1-x}Rh_xO_2$, où x est un nombre compris entre 0 et 0,5, caractérisé en ce qu'il consiste, à une température d'au moins 350 °C et sous une pression d'au moins 400 bars, à oxyder du $Cr_2O_3$, hydraté ou anhydre, ou un précurseur de $Cr_2O_3$, en présence (1) d'un composé du rhodium III donnant *in situ* du $RhO_2$ dans les conditions de la réaction, et (2) d'un agent oxydant constitué par un composé oxygéné exempt des cations métalliques autres que le chrome et ne conduisant pas à la formation préférentielle ou parasite de chromates, de bichromates ou de tout autre composé du chrome à un degré d'oxydation supérieur à + IV, et ayant, dans les conditions de la réaction, une pression partielle d'oxygène au moins égale à celles qui correspondent, dans les mêmes conditions de température et de pression, aux équilibres $Cr_2O_3 + 1/2O_2 \rightleftharpoons 2CrO_2$ et $Rh_2O_3 + 1/2O_2 \rightleftharpoons 2RhO_2$, ainsi qu'éventuellement (3) d'eau de dilution et/ou d'au moins un agent dopant complémentaire agissant comme tampon du milieu réactionnel, et/ou d'au moins un agent modificateur classique.

On a trouvé qu'une variante tout particulièrement avantageuse de ce procédé comprend l'utilisation concomitante d'au moins un agent dopant complémentaire agissant comme tampon du milieu réactionnel. On a en effet pu établir qu'on réalise ainsi encore une meilleure maîtrise de la taille et de la forme des particules de $Cr_{1-x}Rh_xO_2$ (où $0 < x < 0{,}5$) formées et partant l'obtention d'une solution solide $Cr_{1-x}Rh_xO_2$ encore améliorée. Un autre objet de l'invention est donc un procédé tel que ci-dessus défini, comprenant en outre la mise en œuvre concomitante d'au moins un agent dopant complémentaire agissant comme tampon du milieu réactionnel.

L'invention a également pour objet le produit lui-même, consistant en un composé ferromagnétique à base de dioxyde de chrome et de dioxyde de rhodium, sous la forme d'une solution solide $Cr_{1-x}Rh_xO_2$ où x est un nombre compris entre 0 et 0,5, de préférence d'au plus 0,01 environ, et plus avantageusement encore d'environ 0,001.

On a trouvé, de plus, que le nouveau composé ferromagnétique selon l'invention présente des propriétés physiques et des propriétés magnétiques qui en font un produit tout particulièrement adapté pour être utilisé dans des éléments d'enregistrement magnétique, notamment pour l'enregistrement audio ou vidéo, pour la mise en mémoire magnétique de données, etc.

L'invention a donc aussi pour objet des éléments d'enregistrement magnétique qui consistent en un support (notamment une bande, un disque, un tambour ou un tore) de matière non magnétique comportant au moins une piste magnétique ou une surface magnétique comprenant un matériau ferromagnétique à base du composé mixte de dioxyde de chrome et de dioxyde de rhodium selon l'invention, ainsi qu'un liant approprié, si nécessaire.

Le rhodium est un métal qu'on considère classiquement comme faisant partie des métaux du groupe du platine ; mais le rhodium IV a la structure électronique 4 d 5 ($t_{2g}^5$ $eg^0$) différente de celle des éléments voisins dans le même état de valence, à savoir le ruthénium IV $4d^4$ ou le palladium IV $4d^6$. Dans les oxydes, le rhodium IV est à spin faible, du fait de la forte valeur du champ cristallin Δc. On a tiré profit dans l'invention de ce que le rhodium IV possède alors un électron célibataire et une anisotropie magnétique importante parfaitement apte à modifier les propriétés magnétiques du dioxyde de chrome $CrO_2$. Dans le cas de l'hypothèse éventuelle d'un transfert de charges sous certaines conditions au sein de la solution solide $Cr_{1-x}Rh_xO_2$ ($Cr^{4+}+Rh^{4+} \longrightarrow Cr^{5+} + Rh^{3+}$), c'est le chrome V présent, de structure électronique $t^1_{2g}$ $C_g^0$ qui présenterait une anisotropie magnétique. Mais c'est seulement par une étude approfondie des conditions d'existence simultanée des oxydes $RhO_2$ et $CrO_2$, qu'aucune des divulgations de l'art antérieur ne suggérait d'ailleurs, qu'on a trouvé que l'oxyde $RhO_2$ de structure rutile pouvait former une solution solide continue avec le dioxyde de chrome $CrO_2$ et que cette solution solide constituait bien un composé nouveau individualisable et ferromagnétique dans un intervalle déterminé. Ainsi, il faut noter que, contrairement à l'affirmation de R. D. Shannon et al. (Journal of Physical Society of Japan, *31*, 6, 1971, p. 1650), tous les dopages qu'on pourrait tenter avec les éléments de structure $d^5$ ne conduiraient pas à un accroissement de la température de Curie $T_c$. D'autre part, dans les oxydes métalliques respectivement à base de fer et d'iridium, $Fe^{3+}$ est à spin fort ($t_{2g}^3eg^2$), mais par contre $Ir^{4+}$ est probablement à spin faible ($t_{2g}^5eg^0$) et, cependant, on n'a pu encore mettre en évidence aucune solution solide de type $Cr_{1+x}Ir_xO_2$.

Le rhodium apparaît donc comme un élément original. Son mécanisme d'action sur le dioxyde de chrome, conduisant à la formation d'une solution solide $Cr_{1-x}Rh_xO_2$ selon l'invention, permet bien de le différencier des nombreux éléments utilisés antérieurement comme dopants du $CrO_2$.

Le composé de l'invention est obtenu par un procédé comprenant essentiellement l'oxydation, dans des conditions appropriées de température et de pression, en particulier à une température d'au moins 350 °C, et avantageusement de 350 à 500 °C environ, et sous une pression d'au moins 400 bars, de $Cr_2O_3$ hydraté ou non ou d'un précurseur de $Cr_2O_3$, en présence (1) d'une quantité appropriée, avantageusement telle que le rapport r de la masse de chrome dans la source de chrome à la masse de rhodium dans la source de rhodium soit d'approximativement 5 100 à 0,50, d'un composé du rhodium III susceptible de donner du $RhO_2$ dans les conditions de la réaction, et (2) d'un agent oxydant constitué par un composé oxygéné exempt de cations métalliques autres que le chrome et ne conduisant pas à la formation préférentielle ou parasite de chromates, de bichromates ou de tout autre composé du chrome à un degré

d'oxydation supérieur à + IV, et ayant, dans les conditions de la réaction, une pression partielle d'oxygène au moins égale à celles qui correspondent, dans les mêmes conditions de température et de pression, aux équilibres $Cr_2O_3 + 1/2O_2 \rightleftharpoons 2CrO_2$ et $Rh_2O_3 + 1/2O_2 \rightleftharpoons 2RhO_2$, ainsi qu'éventuellement (3) d'eau de dilution et/ou d'au moins un agent dopant complémentaire agissant comme tampon du milieu réactionnel, et/ou d'au moins un agent modificateur classique.

Le produit de départ renfermant du chrome qu'on oxyde selon l'invention conjointement avec le composé du rhodium III donnant du $RhO_2$ « in situ », dans les conditions de la réaction, peut notamment être choisi parmi du $Cr_2O_3$ anhydre, du $Cr_2O_3$ hydraté, c'est-à-dire en pratique $Cr_2O_3$, $x''H_2O$ dans lequel x'' est un nombre variant sensiblement de 1 à 6, et avantageusement du $Cr_2O_3$ finement divisé préalablement obtenu par décomposition thermique à basse température de $(NH_4)_2Cr_2O_7$.

La source de rhodium peut notamment, et de préférence, être constituée par du $Rh_2O_3$, $5H_2O$ ou du $RhCl_3$, $4H_2O$ (ou tout autre hydrate de celui-ci). Mais tout composé du rhodium susceptible de se transformer en $RhO_2$ dans les conditions expérimentales adoptées peut également convenir.

Le rapport r de la masse de chrome dans le produit de départ renfermant du chrome à la masse de rhodium dans la source de rhodium III est de préférence compris sensiblement entre 5 100 et 0,50 environ.

Pour plus de détail concernant la réaction d'oxydation elle-même, on peut se référer utilement à la demande de second certificat d'addition 2.403.976 à la demande de brevet 2.327.198 déjà mentionnée plus haut. Il convient seulement, là où il n'est question que du chrome de départ dans cette demande, de considérer non plus le chrome III seul, mais l'ensemble Cr III + Rh III.

Ainsi, parmi les agents oxydants répondant à la définition ci-dessus qu'on peut mettre en œuvre selon l'invention, on peut citer tout particulièrement $HXO_y$, $zH_2O$, où X est Cl ou I, y est un entier positif inférieur ou égal à 4, et z est un nombre qui représente le nombre de molécules d'eau de dilution dudit oxydant si celui-ci n'existe qu'en solution, ou de dilution et de cristallisation s'il est sous forme solide, soit en pratique un nombre sensiblement compris entre 3 et 40, et notamment $HClO_4$, $zH_2O$, $HIO_3$ et $HIO_4$, $2H_2O$, ainsi que $HBrO_3$, $HNO_3$, $NH_4ClO_4$ et $Cr(IO_3)_3$, $x'H_2O$, où x' est un nombre, en pratique variable de 0 à 8, représentant le degré d'hydratation de iodate de chrome III.

En règle générale, cependant, tout composé oxydant possédant un pouvoir oxydant suffisant pour oxyder, dans les conditions de la réaction, le Cr III en Cr IV et le Rh III en Rh IV avec des cinétiques appropriées, et exempt de cations métalliques susceptibles d'entraîner des réactions parasites concurrentielles (telles que la formation de chromates), peut également convenir. Par « cinétique appropriée », on entend que l'agent oxydant doit oxyder pratiquement simultanément le chrome et le rhodium au degré + IV de telle manière que la formation de la solution solide soit possible en un temps compatible avec un processus industriel.

Il convient en pratique d'adapter quelque peu les conditions opératoires pour chaque combinaison de source de chrome, de source de rhodium III et d'agent oxydant mise en œuvre, et l'homme de l'art est tout à fait à même de déterminer dans chaque cas d'espèce les conditions véritablement appropriées, avec l'aide de la description ci-dessous, dans laquelle sont détaillées les combinaisons source de Cr/source de Rh III/agent oxydant les plus intéressantes et où sont mieux précisées les conditions opératoires donnant, cas par cas, les meilleurs résultats.

Dans le procédé selon l'invention, la température doit être supérieure à 350 °C environ, et de préférence de 350 à 500 °C environ, tandis que la pression doit en pratique être d'au moins 400 bars. Ces conditions opératoires, ainsi que les proportions respectives de composé procurant du chrome, de composé procurant du Rh III et d'agent oxydant (qui peut lui-même procurer aussi du chrome), seront mieux précisées dans la suite du présent contexte, en référence à des cas concrets non limitatifs de combinaisons source de Cr/source de Rh III/agent oxydant.

Selon l'invention, on peut ainsi préparer une solution solide ferromagnétique $Cr_{1-x}Rh_xO_2$ par oxydation de $Cr_2O_3$, $x''H_2O$ (où x'' est tel que défini plus haut) et de $Rh_2O_3$, $5H_2O$ (ou de $RhCl_3$, $4H_2O$) par de l'iodate de chrome III $Cr(IO_3)_3$, $x'H_2O$, dans lequel x' peut valoir sensiblement de 0 à 8. Ce iodate peut être lui-même préparé par la méthode décrite par K. Nassau, J. W. Shiever et B. E. Prescott (Journal of Solid State Chemistry, *7*, 186, 1973) et qui consiste en l'addition d'acide iodique $HIO_3$ à une solution de nitrate de chrome III $Cr(NO_3)_3$, puis lavage à l'eau et séchage éventuels. L'iodate obtenu est de couleur verte et plus ou moins hydraté. $Cr_2O_3$, $x''H_2O$ et $Cr(IO_3)_3$, $x'H_2O$ sont deux solides et il est donc préférable, notamment pour assurer une bonne homogénéité du mélange réactionnel, d'ajouter de l'eau. L'ion $IO_3^-$ contenu dans l'iodate sert à oxyder le chrome contenu dans l'oxyde de chrome trivalent hydraté et le rhodium contenu dans la source de rhodium III, ainsi que le chrome contenu dans l'iodate lui-même.

On obtient d'excellents résultats d'une part pour un rapport $r_1$ du nombre total d'atomes de (Cr + Rh) contenus respectivement dans $Cr_2O_3$, $x''H_2O$ et dans la source de Rh III au nombre d'atomes de Cr contenus dans $Cr(IO_3)_3$, $x'H_2O$ compris entre 5 et 6 environ, et d'autre part pour un rapport $r_2$ de la masse d'eau ajoutée sur la masse d'iodate utilisée compris entre 1,5 et 2 environ. En pratique, on opère à une température comprise entre 490 et 540 °C environ et sous une pression de 2 400 à 4 000 bars, et avantageusement de 3 000 bars environ. Le produit obtenu dans ces conditions opératoires et après une durée de réaction de quelques heures est exclusivement une solution solide continue de formule $Cr_{1-x}Rh_xO_2$.

On obtient aussi une telle solution solide essentiellement en oxydant du $Cr_2O_3$ anhydre et du $Rh_2O_3$, $5H_2O$ (ou du $RhCl_3$, $4H_2O$), à une température supérieure à 350 °C et sous une pression supérieure à 400 bars environ, dans un milieu oxydant, solide ou en solution liquide aqueuse, avantageusement constitué d'un composé $HClO_y$, $zH_2O$, où y et z sont tels que définis plus haut.

L'oxyde de chrome III $Cr_2O_3$ pulvérulent préparé par décomposition thermique (ΔQ) du bichromate d'ammonium $(NH_4)_2Cr_2O_7$ est particulièrement adapté pour être utilisé comme source de chrome dans ce procédé.

$$(NH_4)_2Cr_2O_7 \xrightarrow{\Delta Q} N_2\nearrow + 4H_2O\nearrow + Cr_2O_3$$

Afin d'obtenir des grains de $Cr_2O_3$ très fins, qui conditionnent eux-mêmes la finesse de la solution solide obtenue selon l'invention, on peut recourir à l'un quelconque des procédés suivants :

— pulvérisation d'une solution de bichromate d'ammonium dans un courant de gaz chauffé à plus de 400 °C,

— lyophilisation d'une solution de bichromate d'ammonium puis décomposition thermique des fines particules obtenues,

— broyage mécanique de bichromate d'ammonium solide et décomposition thermique de la poudre ainsi obtenue.

On a constaté que ce $Cr_2O_3$ ainsi préparé se transforme en $CrO_2$ dans des solutions même peu oxydantes, telles que des solutions aqueuses d'acide perchlorique $HClO_4$ contenant seulement 10 % en poids d'acide pur, alors qu'un oxyde $Cr_2O_3$ préparé selon les procédés industriels classiques est moins réactif.

D'autre part, la division des produits de départ facilitant la réactivité de celui-ci, les durées de réaction sont relativement courtes, et notamment de l'ordre de 5 à 120 minutes selon les conditions expérimentales. Cette brièveté des temps de réaction ne permet pas la formation de gros microcristaux ; elle conduit au contraire à la formation de microcristaux de forme aciculaire et de faibles dimensions. Il s'agit donc là d'une forme de mise en œuvre très avantageuse du procédé selon l'invention.

La pression et la température utilisées jouent un rôle non négligeable également sur la cristallogenèse du produit formé. Une pression voisine de 1 000-2 500 bars et une température comprise entre 360 et 400 °C environ sont particulièrement bien adaptées à l'obtention de petits monocristaux.

En règle générale, la concentration de la solution oxydante est aussi particulièrement importante. Des solutions trop concentrées semblent favoriser également la croissance cristalline rapide de la solution solide.

Dans le cas précédent, le choix de solutions aqueuses oxydantes de $HClO_4$ contenant de 20 à 22 % environ en poids d'acide pur est apparu avantageux et a permis d'obtenir des microcristaux ayant les dimensions désirées, notamment ayant une longueur L à 1 à quelques microns.

Le rapport $r_3$ de la masse de solution oxydante utilisée à la masse de l'ensemble du chrome contenu dans le $Cr_2O_3$ et du rhodium contenu dans la source de Rh III doit avantageusement être supérieur ou au moins égal à 1,4.

Pour calculer ce rapport, il convient de considérer comme masse de solution oxydante la masse d'acide $HClO_4$ à 33 % en poids contenue dans la solution diluée. Un rapport $r_3$ voisin de 1,5 est particulièrement adapté à la production de solution solide $Cr_{1-x}Rh_xO_2$ avec un excellent rendement.

De façon plus concrète, on peut préciser que, dans la pratique et à l'échelle du laboratoire, on place un mélange réactionnel, constitué de $Cr_2O_3$ anhydre, de $Rh_2O_3$, $5H_2O$ ou de $RhCl_3$, $4H_2O$, et de la solution oxydante, dans un tube de métal noble, par exemple de l'or, qu'on scelle ensuite. On place ce tube dans une enceinte réactionnelle agencée de façon à pouvoir être chauffée ; intérieurement ou extérieurement, et contenant un fluide sous pression. A l'échelle industrielle, il convient plutôt d'utiliser une enceinte réactionnelle gainée intérieurement par un métal inattaquable par la solution oxydante. Après une durée de réaction qui varie selon les conditions opératoires mises en œuvre, on obtient dans le tube un produit solide qui est exclusivement constitué d'une solution solide $Cr_{1-x}Rh_xO_2$, si l'on a opéré convenablement.

On a constaté que, du fait sans doute de la réactivité du $Cr_2O_3$ finement divisé obtenu par décomposition thermique du bichromate d'ammonium, la transformation en $CrO_2$ est effective dans différents milieux oxydants, comme par exemple les acides $HClO_y$, $zH_2O$, où y et z sont tels que définis plus haut, ou $HBrO_3$, $HIO_3$, $HIO_4$, $2H_2O$ et $HNO_3$.

Dans la variante où on met en œuvre du $Cr_2O_3$ finement divisé préalablement obtenu par décomposition thermique à basse température de $(NH_4)_2Cr_2O_7$, le rapport $r_3$ de la masse d'oxydant à l'ensemble de la masse de Cr contenue dans le bichromate d'ammonium et de la masse de Rh contenu dans la source de Rh III doit alors avantageusement être supérieur ou égal à 1,4 dans le cas d'une solution de $HClO_4$, contenant environ 33 % d'acide pur ou d'une solution de $HBrO_3$ contenant environ 15 à 20 % en poids d'acide pur, compris entre 1 et 3 dans le cas de $HIO_3$, sensiblement égal à 3 dans le cas de $HIO_4$, $2H_2O$ et supérieur à environ 3 dans le cas d'une solution aqueuse d'acide nitrique $HNO_3$ contenant de 15 à 100 % en poids d'acide pur.

Dans le cas où l'agent oxydant est un solide, la masse d'eau qu'il convient d'utiliser est de préférence d'environ 1 à 3 fois la masse d'oxydant.

Selon un mode de mise en œuvre préféré de cette variante de l'invention, on opère sous une pression supérieure à 400 bars environ, tandis que la température est sensiblement maintenue entre 360 et 450 °C.

Concrètement, on place dans un tube inattaquable, par exemple en or, qu'on scelle ensuite, le mélange réactionnel constitué de $Cr_2O_3$ finement divisé, préalablement obtenu par décomposition thermique à basse température de bichromate d'ammonium, de la source de Rh III et d'une solution oxydante conforme à l'invention. On place ensuite le tube dans une enceinte réactionnelle, chauffée (extérieurement ou intérieurement) et contenant un fluide sous pression. Le produit obtenu une fois la réaction terminée se présente à l'observation en microscopie électronique, sous la forme de microcristaux noirs de forme aciculaire ; l'analyse radiocristallographique montre qu'il s'agit exclusivement d'une phase unique de structure rutile, constituée par une solution solide correspondant à la formule $Cr_{1-x}Rh_xO_2$.

Il est à remarquer que, selon cette variante consistant à préparer le dioxyde de chrome à partir du bichromate d'ammonium, la diminution de la dilution de la solution oxydante s'est avérée favoriser la formation de petits microcristaux, tendant ainsi à conférer à la solution solide obtenue un champ coercitif intrinsèque accru.

En variante, on a trouvé qu'on peut utiliser, comme agent oxydant de la source de Rh III et du $Cr_2O_3$ (hydraté ou non), au lieu des acides oxydants envisagés ci-dessus et qui sont relativement corrosifs, un perchlorate approprié. Plus précisément, on a trouvé qu'on obtenait alors la solution solide considérée ; et qu'on évitait la formation parasite de chromates, de bichromates, ou de tout autre composé du chrome à un degré d'oxydation supérieur à + IV, et tout dopage secondaire non contrôlé, en utilisant comme agent oxydant du perchlorate d'ammonium $NH_4ClO_4$, en présence d'eau si nécessaire. On a en effet constaté que $NH_4ClO_4$ se décompose parfaitement sous l'effet de la température, dans les conditions de la réaction, à savoir à une température supérieure à 350 °C et sous une pression supérieure à 500 bars environ.

Le rapport $r_4$ de la masse de $NH_4ClO_4$ à l'ensemble de la masse de chrome contenue dans l'oxyde $Cr_2O_3$, hydraté ou non, ou dans le bichromate d'ammonium $(NH_4)_2Cr_2O_7$, et de la masse de Rh contenue dans la source de Rh III, est de préférence supérieur à 2,4 environ. La masse d'eau qu'il convient en pratique d'ajouter dans le cas où la source de chrome est $Cr_2O_3$ ou $Cr_2O_3$, $x''H_2O$ est sensiblement égale à 2 fois la masse de $NH_4ClO_4$.

Selon une forme de mise en œuvre tout particulièrement préférée du procédé de l'invention, tel qu'il est défini dans l'une quelconque de ses diverses variantes qui sont décrites ci-dessus, il s'est également avéré qu'il est devenu possible de diviser par un facteur d'au moins 10 la quantité de rhodium utilisée, par rapport à celle qui était préconisée plus haut, tandis que l'on obtient pourtant encore un produit final dont les caractéristiques magnétiques sont au moins aussi bonnes que celles du produit obtenu de la même manière, mais sans addition d'agent dopant complémentaire tel que défini ci-après. Cela constitue un avantage supplémentaire du procédé selon l'invention, étant donné le coût élevé du rhodium, coût dont l'incidence peut ainsi être considérablement réduite.

Concrètement, on entend par « agent dopant complémentaire agissant comme tampon du milieu réactionnel » tout composé autre que ceux qui participent directement à la réaction et qui, dans les conditions de la réaction, doit être apte à exercer un effet tampon, au sens où on l'entend habituellement en chimie, ce qui signifie qu'il doit contribuer à abaisser l'acidité du milieu réactionnel jusqu'à une valeur du pH moyenne peu variable. Un tel composé doit de préférence également être apte à s'adsorber sur les cristaux en formation et à en ralentir la croissance. Dans la pratique, les composés les mieux appropriés à cet effet se sont révélés être, mais sans que cela soit limitatif, l'acide borique $H_3BO_3$, l'acide oxalique, COOH—COOH, ou toute combinaison de ces composés entre eux, ou tout autre agent ayant la même action sur le plan physico-chimique.

Le rapport de la masse d'agent dopant complémentaire de ce type à la masse d'agent oxydant mis en œuvre dans la réaction est de préférence compris entre 0,03 et 0,60 environ, et plus avantageusement voisin de 0,13, en ce qui concerne l'acide borique et, dans le cas particulier, qui constitue une variante préférée, où l'agent oxydant est du perchlorate d'ammonium $NH_4ClO_4$.

Selon une forme de mise en œuvre tout particulièrement préférée du procédé selon l'invention, l'agent dopant complémentaire est constitué par une combinaison d'acide borique, dans la proportion susdite par rapport à l'agent oxydant, et d'acide oxalique dans une proportion telle que le rapport de la masse d'acide oxalique à la masse d'agent oxydant soit compris entre 0,03 et 0,20 environ, ce dernier étant alors essentiellement du perchlorate d'ammonium $NH_4ClO_4$.

On notera que, bien que ces agents dopants complémentaires soient des acides, les anions qui en découlent en solution peuvent de fait être considérés comme exerçant un effet tampon sur l'acidité du milieu.

Selon une autre forme de mise en œuvre encore plus avantageuse du procédé selon l'invention, on obtient une exaltation supplémentaire des propriétés magnétiques du $Cr_{1-x}Rh_xO_2$ formé, en ajoutant, en plus des agents dopants complémentaires précités, un ou plusieurs autres éléments modificateurs judicieusement sélectionnés parmi ceux connus de l'homme de l'art, notamment des éléments modificateurs choisis, sans que cela soit limitatif, parmi Fe, Sb, Te, Sn ou des mélanges de ceux-ci.

Cette exaltation peut être de deux types :

— soit au niveau de l'anisotropie magnétique, et dans ce cas elle est le fait d'un agent dopant qui

entre dans la maille du rutile, et dont l'action est renforcée par la présence de rhodium.

— soit au niveau de la cristallogenèse, et dans ce cas elle est le fait d'un agent inhibiteur ou orienteur de la croissance des microcristallites, dont l'action est encore notablement renforcée par l'effet tampon qu'exerce l'agent dopant complémentaire ajouté selon l'invention.

Les proportions et quantités de ces éléments modificateurs éventuellement ajoutés peuvent être très variables et sont aisément déterminées par l'homme de l'art, qui peut en fait les fixer en fonction des spécifications qui sont souhaitées dans chaque cas d'espèce.

De manière générale, si l'on soumet à une analyse radiocristallographique le produit obtenu selon l'une quelconque des variantes du procédé conforme à l'invention, on constate d'une part la présence d'une phase unique de structure rutile, et d'autre part une variation des paramètres a et c de la maille élémentaire, ainsi que le montre le Tableau I ci-après ; c'est là un excellent indice du remplacement des atomes de Cr IV par ceux de Rh IV plus volumineux au sein même de la structure cristaline.

TABLEAU I

Evolution des paramètres de la solution solide $Cr_{1-x}Rh_xO_2$ pour quelques faibles valeurs de x (données aux incertitudes de mesures près)

| x | a (Å) | c (Å) | c/a |
|---|---|---|---|
| 0 | 4,421 | 2,916 | 1,516 |
| 0,01 | 4,422 | 2,918 | 1,515 |
| 0,02 | 4,423 | 2,919 | 1,515 |
| 0,2 | 4,434 | 2,945 | 1,505 |
| 0,3 | 4,443 | 2,955 | 1,503 |

La formule de la solution solide conforme à l'invention est $Cr_{1-x}Rh_xO_2$. Bien qu'en théorie il soit possible de faire varier x de 0 jusqu'à 1 (s'agissant d'une solution solide continue), une limitation s'impose en pratique, du fait de l'évolution de la température de Curie du matériau ferromagnétique à mesure que x croît. Comme le montre en effet le Tableau II ci-après, la température de Curie diminue rapidement lorsque x augmente.

TABLEAU II

Evolution de la température de Curie en fonction du paramètre x dans la solution solide $Cr_{1-x}Rh_xO_2$ (données aux incertitudes de mesure près).

| x | $T_C$ (°C) |
|---|---|
| 0,00 | 122 |
| 0,01 | 121 |
| 0,03 | 118 |
| 0,2 | 110 |
| 0,3 | 101 |
| 0,4 | 85 |

On peut expliquer ce phénomène par le fait que les interactions magnétiques entre atomes de Cr IV voisins dans la maille cristallographique diminuent au fur et à mesure que les atomes de Rh IV remplacent ceux de Cr IV. Or, les matériaux ferromagnétiques intéressants sur le plan des applications industrielles doivent présenter une température de Curie au moins égale à 25 °C environ.

On a également constaté que le dopage (ou modification) avec du rhodium a également pour effet de modifier la cristallogenèse du dioxyde de chrome, la croissance cristalline de $RhO_2$ étant plus lente. Or, on sait, d'après l'état de la technique, que les propriétés magnétiques d'un matériau ferromagnétique dépendent étroitement de la taille des microcristallites qui le constituent. Le rhodium III conduisant à du $RhO_2$ « in situ » selon l'invention constitue donc un agent modificateur, ou dopant, exceptionnel, en ce sens qu'il agit également dans un sens favorable sur le champ coercitif intrinsèque du produit ferromagnétique obtenu.

De plus, on a aussi trouvé selon l'invention que le rhodium permet d'exalter les propriétés magnétiques d'échantillons de $CrO_2$ dopés également par des éléments classiques, choisis notamment parmi ceux décrits dans les brevets et demandes de brevets cités plus haut. Bien que ces agents dopants additionnels puissent en principe être quelconques, il convient en pratique de les choisir parmi ceux (1)

susceptibles d'orienter ou de ralentir la cristallogenèse du matériau et/ou (2) dont les propriétés magnétiques peuvent être améliorées en présence du rhodium. Ainsi, le champ coercitif du $CrO_2$ est déjà sensiblement augmenté par un dopage avec de l'antimoine. Mais on a pu constater que l'adjonction, conformément à l'invention, même d'un faible pourcentage de rhodium, exalte encore de façon inattendue cet accroissement du champ coercitif. On a observé ce phénomène avec d'autres agents dopants, tels que par exemple de tellure, avec lequel le rhodium a manifesté un effet de synergie sur le renforcement apporté aux qualités magnétiques du matériau ferromagnétique obtenu dans les conditions du procédé de l'invention.

L'invention est décrite ci-après plus en détail, en référence à quelques exemples illustratifs qui ne la limitent aucunement.

Exemple 1

On a placé dans un tube en or un mélange homogène constitué de 33,73 mg de $Cr_2O_3$ sous forme de poudre finement divisée et tamisée et 0,77 mg de $Rh_2O_3$, $5H_2O$, ainsi que 121,4 mg d'une solution d'acide perchlorique au 1/5 (contenant environ 20 % en poids d'acide pur). On a scellé le tube et on l'a placé dans une enceinte réactionnelle, où on l'a soumis à une température de 390 °C et à une pression de 2 500 bars pendant 15 minutes. Après ouverture du tube, une fois la réaction terminée, on a retiré de celui-ci exclusivement une solution solide de formule $Cr_{0,99}Rh_{0,01}O_2$. Le champ coercitif intrinsèque mesuré avait pour valeur 34,2 kA/m, tandis que l'aimantation rémanente valait 6r = 26,3 u.e.m/g et que le rapport 6r/6s (aimantation rémanente/aimantation à saturation) était de 0,5 environ.

Exemple 2

On a suivi dans son principe le mode opératoire de l'exemple 1, mais on a fait varier la proportion de $Rh_2O_3$, $5H_2O$ introduite de telle façon qu'on ait les valeurs finales de x indiquées respectivement dans le tableau III ci-après, et en faisant aussi varier la nature de l'agent oxydant et/ou les conditions opératoires. Les données propres à chaque expérience ainsi réalisées, ainsi que les valeurs obtenues pour x et pour le champ coercitif intrinsèque, dans chaque cas, sont détaillées dans le tableau III.

Exemple 3

On a placé dans un tube en or un mélange homogène constitué de 30,1 mg de $Cr_2O_3$, 0,7 mg de $Rh_2O_3$, $5H_2O$ et 50 mg de $NH_4ClO_4$, et on y a ajouté 150 mg d'eau de dilution.

On a ensuite mélangé d'autre part 30,4 mg de $Cr_2O_3$, 0,07 mg de $Rh_2O_3$, $5H_2O$ et 50 mg de $NH_4ClO_4$, qu'on a placés dans un second tube, avec également 150 mg d'eau de dilution.

On a scellé les deux tubes et on les a soumis à une pression de 2 000 bars et à une température de 350 °C, pendant 10 minutes. Après réaction et ouverture des tubes, on a recueilli dans le premier tube une solution solide de formule générale $Cr_{0,99}Rh_{0,01}O_2$ présentant un champ coercitif intrinsèque de 29,0 kA/m, et dans le second tube une solution solide de formule générale $Cr_{0,999}Rh_{0,001}O_2$ présentant un champ coercitif intrinsèque de 310 œrsteds.

L'augmentation du pourcentage atomique de rhodium semble accroître la force coercitive intrinsèque du produit obtenu ; mais on peut déduire du tableau III de l'exemple 2 que la valeur $x \simeq 0,01$ correspond pratiquement à un maximum de la valeur du champ coercitif intrinsèque.

Exemple 4

On a placé un mélange homogène de 49 mg de $Cr_2O_3$ et 1,1 mg de $Rh_2O_3$, $5H_2O$ dans un tube en or, en présence de 146,5 mg d'une solution d'acide perchlorique au 1/5. On a ensuite scellé le tube et on l'a soumis à une pression de 2 600 bars et à une température de 375 °C pendant 30 minutes. Après une trempe en température, on a ouvert le tube et on a recueilli exclusivement une solution solide ferromagnétique de composition globale $Cr_{0,99}Rh_{0,01}O_2$, présentant un champ coercitif intrinsèque de 32,2 kA/m.

Exemple 5

On a placé dans un tube en métal inattaquable (tube garni par exemple d'un revêtement intérieur d'or) un mélange réactionnel homogène constitué de 41,7 mg de $Cr_2O_3$ et 2,4 mg de $Rh_2O_3$, $5H_2O$ et on a ajouté 121 mg d'une solution d'acide perchlorique contenant environ 20 % en poids d'acide pur. On a scellé le tube et on l'a soumis à une pression de 1 100 bars et à une température de 380 °C pendant 1 heure, après quoi on a ouvert le tube et on en a retiré une phase ferromagnétique solide de formule générale $Cr_{0,975}Rh_{0,025}O_2$ présentant un champ coercitif intrinsèque de 25,4 kA/m..

Exemple 6

Dans un tube en métal inattaquable (par exemple en or), on a placé 1,9 mg de $RhCl_3$, $4H_2O$, 50,2 mg de $Cr_2O_3$, et 145 mg d'acide perchlorique au 1/5 (contenant environ 20 % en poids d'acide pur). On a ensuite scellé le tube et on l'a placé dans une enceinte réactionnelle à une pression de 1 600 bars et une température d'environ 400 °C pendant 5 minutes. La montée en température et en pression a duré sensiblement 30 minutes. Le tube une fois ouvert contenait uniquement un matériau ferromagnétique de formule $Cr_{0,99}Rh_{0,01}O_2$, présentant un champ coercitif intrinsèque de 29,6 kA/m.

Exemple 7

On a réalisé des dopages de $CrO_2$ à la fois avec de l'antimoine et du rhodium, selon l'invention, en suivant dans son principe le mode opératoire de l'exemple 1, et on a pour ce faire réalisé quelques expériences dont le détail et les résultats sont consignés dans le tableau IV ci-après.

Dans la partie A de ce tableau IV, on relate des essais effectués en présence d'acide perchlorique au 1/5, la masse de solution oxydante ramenée à 33 % d'acide pur représentant toujours environ 1,4 fois la masse de chrome contenue dans l'oxyde $Cr_2O_3$. La partie B a trait à l'utilisation, en tant qu'agent oxydant, de perchlorate d'ammonium dans les proportions de 50 mg de $NH_4ClO_4$ pour 100 mg de $H_2O$ et 30 mg de mélange de Cr, Rh et Sb (introduits respectivement sous forme de $Cr_2O_3$ anhydre, de $Rh_2O_3$, $5H_2O$, et de $Sb_2O_3$).

On voit très nettement d'après ce tableau IV que le rhodium exalte le champ coercitif intrinsèque du $CrO_2$ dopé.

Exemple 8

On a réalisé des essais semblables dans leur principe à ceux de l'exemple 6, en vue de déterminer l'effet du rhodium sur du $CrO_2$ dopé au tellure. Le détail des conditions opératoires et les résultats obtenus sont consignés dans le tableau V ci-après.

On note là encore une exaltation (effet de synergie) procurée par le rhodium sur le champ coercitif intrinsèque du dioxyde de chrome modifié par du tellure (introduit sous forme de $TeO_2$).

Exemple 9

On a utilisé 85 mg de solution solide ferromagnétique de formule générale $Cr_{0,99}Rh_{0,01}O_2$, préparée conformément à l'exemple 2 et ayant un champ coercitif de 17,9 kA/m environ. On a ajouté 0,1 mg de $TeO_2$ de telle manière que le rapport du nombre d'atomes de tellure au nombre d'atomes de chrome soit sensiblement voisin de 0,006. On a placé le mélange réactionnel des deux solides dans un tube d'or, avec environ 17 mg de solution oxydante sous forme d'acide perchlorique au 1/5. On a ensuite scellé le tube et on l'a soumis à une pression de 2 600 bars et une température voisine de 380 °C pendant 30 minutes. Après trempe en température et ouverture du tube, on a obtenu un matériau ferromagnétique présentant un champ coercitif intrinsèque de 23,08 kA/m.

Exemple 10

On a utilisé 12 mg de solution solide ferromagnétique de formule générale $Cr_{0,99}Rh_{0,01}O_2$, préalablement préparée comme indiqué dans l'exemple 2 et ayant un champ coercitif intrinsèque de 16,5 kA/m, environ. On y a ajouté sensiblement 1 mg d'oxyde d'antimoine $Sb_2O_3$ de telle manière que le rapport atomique Sb/Cr soit sensiblement égal à 0,05. On a placé ce mélange réactionnel dans un tube d'or contenant environ 20 mg de solution oxydante sous forme d'acide perchlorique $HClO_4$ au 1/5. On a ensuite scellé le tube et on l'a soumis à une pression de 2 500 bars et une température de 390 °C environ pendant 30 minutes. Après trempe en température, on a ouvert le tube et le matériau ferromagnétique obtenu présentait un champ coercitif intrinsèque voisin de 19,5 kA/m.

Exemple 11

On a homogénéisé et placé dans un tube en or, avec 150 mg d'eau, un mélange constitué de 50 mg de $NH_4ClO_4$, 30 mg de sesquioxyde de chrome $Cr_2O_3$ préalablement préparés par calcination de bichromate d'ammonium et 0,7 mg de $Rh_2O_3$, $5H_2O$. On a scellé le tube et on l'a placé dans une enceinte réactionnelle, où on l'a soumis à une pression de 2 000 bars et à une température de 380 °C. L'ensemble des opérations en tube scellé a duré environ 60 minutes, avec un palier à 380 °C de sensiblement 25 minutes. Après ouvertue du tube refroidi, une fois la réaction terminée, on a recueilli un produit constitué exclusivement d'un matériau ferromagnétique de composition $Cr_{1-x}Rh_xO_2$, avec $x = 0,01$.

Le champ coercitif de ce matériau était d'environ 29,4 kA/m.

Exemple 12

On a placé dans un tube en or un mélange homogénéisé constitué de 50 mg de $Cr_2O_3$, 116 mg de $NH_4ClO_4$, 15 mg de $H_3BO_3$ et 0,1 mg de $Rh_2O_3$, $5H_2O$, de sorte que le taux de rhodium était de 0,001 environ, tandis que le rapport de la masse de $NH_4ClO_4$ à la masse de $Cr_2O_3$ était voisin de 1,5 et que le rapport de la masse de $H_3BO_3$ à la masse de $NH_4ClO_4$ était environ égal à 0,13. On a ajouté 130 mg d'eau à ce mélange ; on a scellé le tube et on l'a placé dans une enceinte réactionnelle où on l'a soumis à une pression de 2 000 bars et à une température de l'ordre de 425 °C. La durée totale du traitement en tube scellé était d'environ 1 heure et demie. Après réaction et ouverture du tube, on a retiré de celui-ci exclusivement un matériau ferromagnétique $Cr_{1-x}Rh_xO_2$ avec $x = 0{,}001$. Le champ coercitif était égal à 37,8 kA/m.

Exemple 13

On a constitué un mélange homogène avec 0,05 mg de $Rh_2O_3$, $5H_2O$, 25 mg de $Cr_2O_3$ obtenu par calcination de $(NH_4)_2Cr_2O_7$ sous la forme d'une poudre finement broyée, 7,5 mg d'acide borique $H_3BO_3$ et 56 mg de perchlorate d'ammonium $NH_4ClO_4$. Ce mélange était caractérisé par un rapport atomique de Rh à Cr de 0,001 environ, un rapport de la masse de $NH_4ClO_4$ à la masse de $Cr_2O_3$ de 2,24 environ et un rapport de la masse de $H_3BO_3$ à la masse de $NH_4ClO_4$ de 0,13 environ.

On a placé ce mélange dans un tube en or, on y a ajouté environ 65 mg d'eau et un a scellé le tube, qu'on a ensuite soumis à une pression de 2 000 bars et à une température de 425 °C. La durée totale qui s'est écoulée entre le début de la montée en température et l'arrêt de chauffage était de 90 minutes.

Après refroidissement et ouverture du tube, on a recueilli exclusivement un matériau ferromagnétique de formule $Cr_{1-x}Rh_xO_2$ avec $x = 0{,}001$ environ.

Le champ coercitif de ce matériau était d'environ 37,4 kA/m.

Exemple 14

On a réalisé un mélange $M_1$ dont la composition était la suivante : 2,2 mg de $Rh_2O_3$, $5H_2O$, 300 mg de $H_3BO_3$, 2 240 mg de $NH_4ClO_4$ et 1 000 mg de $Cr_2O_3$ (préparé lui-même par calcination de $(NH_4)_2Cr_2O_7$.

On a prélevé 300 mg de ce mélange préalablement homogénéisé et on y a ajouté 4,3 mg d'oxalate de fer, 3,6 mg de $SnO_2$ et 3,5 mg de $Sb_2O_3$. On a à nouveau homogénéisé ce mélange et on l'a placé dans un tube en or avec 210 mg d'eau. On a ensuite scellé le tube et on l'a soumis à une pression de 2 000 bars et à une température de 420 °C pendant 60 minutes. La durée totale du traitement en tube scellé était de 90 minutes, dont le tiers avait été nécessaire pour atteindre la température de 420 °C. Après une trempe en température, on a ouvert le tube et on a recueilli un produit constitué exclusivement d'un matériau ferromagnétique nécessitant aucun processus complexe de séparation et dont le champ coercitif était de 40,1 kA/m.

Exemple 15

On a placé dans un tube en or 200 mg de mélange défini dans l'exemple 14 sous la référence $M_1$, ainsi que 15 mg de $NH_4ClO_4$, 20 mg d'acide oxalique, 10 mg d'oxalate de fer (soit 5 % atomiques de Fe), 10 mg de $Sb_2O_3$ (soit 8 % atomiques de Sb) et 150 mg d'eau. On a scellé le tube et on l'a placé dans une enceinte réactionnelle. Après 60 minutes de montée en température et en pression de cette enceinte, on a stabilisé ces deux paramètres respectivement à 420 °C et à 2 000 bars, et on les a maintenus à ces valeurs pendant 40 minutes. On a ouvert le tube, après l'avoir soumis à une trempe brutale en température sous pression compensée. Le matériau ferromagnétique recueilli, lavé et séché, présentait un champ coercitif de 39,0 kA/m.

Exemple 16

On a introduit dans un tube en or 48,5 mg du mélange $M_1$ défini à l'exemple 14, en présence de 30,9 mg d'eau et de 6,4 mg de $Cr_2O_3$ supplémentaires, de façon à ramener à 1,5 le rapport de la masse de $NH_4ClO_4$ à la masse de $Cr_2O_3$. On a scellé le tube et on l'a maintenu dans une enceinte réactionnelle pendant 85 minutes, en maintenant pendant 45 minutes une température de 420 °C et une pression de 2 000 bars, après avoir fait monter la température et la pression dans cette enceinte jusqu'à ces valeurs. Après une trempe en température et ouverture du tube, on a recueilli un produit exclusivement constitué par une solution solide de formule $Cr_{1-x}Rh_xO_2$ où $x = 0{,}0007$. Ce produit présentait un champ coercitif de 39,8 kA/m.

Exemple 17

En suivant le mode opératoire général décrit à l'exemple 12 ci-dessus, on a réalisé quatre

expériences en faisant varier chaque fois certains des paramètres ou des conditions réactionnelles, ainsi qu'il est indiqué au tableau VI ci-après. La préparation référencée « n° 2 » dans ce tableau correspond en fait strictement à l'exemple 11 ci-dessus.

Les résultats rapportés dans ce tableau mettent en relief l'effet produit par l'agent dopant complémentaire. En particulier, il convient de remarquer que des champs coercitifs de valeurs voisines (soit 29,4 kA/m pour le n° 2 et 32,6 kA/m pour le n° 3) peuvent être obtenus dans des conditions opératoires sensiblement identiques, mais avec, pour l'essai n° 3, un taux de rhodium dix fois moindre. D'autre part, pour un même taux de rhodium (essais n° 1 et 3), on obtient un champ coercitif largement accru, lors de l'adjonction de $H_3BO_3$ conformément à la présente invention.

Exemple 18

On a réalisé d'autres expériences encore, en suivant le mode opératoire général de l'exemple 14 et en faisant varier à chaque fois les proportions et/ou la nature des agents modificateurs classiques éventuellement ajoutés ainsi que, légèrement, les durées de réaction, comme il est indiqué dans le tableau VII.

Conditions opératoires communes à tous ces exemples : taux de rhodium : 0,1 % ; P = 2 000 bars ; T = 420 °C.

Cette série d'essais montre bien les avantages que permettent d'atteindre les diverses variantes préférées du procédé selon l'invention.

Exemple 19

On a réalisé un mélange M dont la composition était de 50 mg de $Cr_2O_3$, préparé par calcination de $(NH_4)_2Cr_2O_7$, 125 mg de $NH_4ClO_4$, 0,1 mg de $Rh_2O_3$, $5H_2O$, 3 mg de $Fe_2(SO_4)_3$, 3,4 mg de $Sb_2O_3$ ; on a ajouté 6 mg d'acide oxalique COOH—COOH, utilisé comme agent dopant complémentaire.

Ce mélange a été placé dans un tube en or en présence de 125 mg d'eau. Après scellement, le tube a été soumis à une pression de 2 000 bars environ et à une température de 430 °C pendant une durée totale de 60 minutes (y compris la montée en température).

Après réaction, le produit obtenu est constitué exclusivement d'un matériau ferromagnétique de structure rutile présentant un champ coercitif de 36,6 kA/m environ.

TABLEAU III

Evolution du champ coercitif du dioxyde de chrome modifié par du rhodium, en fonction du taux de dopage x

| Agent oxydant | x | T (°C) | P (bar) | Durée (minutes) | Concentration C du $HClO_4$ aqueux | Champ coercitif (en kA/m) |
|---|---|---|---|---|---|---|
| $HClO_4$ | 0,000 8 | 420 | 2 600 | 85 | 1/5 | 8,8 |
| $HClO_4$ | 0,001 | 400 | 1 200 | 20 | 1/5 | 9,9 |
| $HClO_4$ | 0,01 | 390 | 2 100 | 30 | 1/5 | 30,9 |
| $HClO_4$ | 0,01 | 385 | 2 200 | 60 | 1/5 | 32,0 |
| $HClO_4$ | 0,01 | 390 | 2 300 | 55 | 1/5 | 33,8 |
| $HClO_4$ | 0,025 | 380 | 1 160 | 60 | 1/5 | 25,4 |
| $HClO_4$ | 0,054 | 370 | 1 400 | 40 | 1/5 | 22,5 |
| $NH_4ClO_4$ | 0,000 1 | 410 | 3 000 | 30 | | 14,3 |
| $NH_4ClO_4$ | 0,001 | 400 | 2 000 | 30 | | 17,9 |
| $NH_4ClO_4$ | 0,005 | 400 | 3 000 | 30 | | 22,2 |
| $NH_4ClO_4$ | 0,01 | 400 | 2 000 | 30 | | 23,1 |
| $NH_4ClO_4$ | 0,01 | 360 | 2 100 | 20 | | 29,4 |

TABLEAU IV

Effet de synergie dans le cas d'un dopage à l'antimoine et au rhodium

| | % atomique Rh | % atomique Sb | T (°C) | P (bar) | durée (minutes) | Concentration C du $HClO_4$ aqueux | Champ coercitif (en kA/m) |
|---|---|---|---|---|---|---|---|
| | 0 | 0,001 | 470 | 1 600 | 150 | 1/5 | 8,6 |
| A | 0,001 | 0 | 470 | 1 600 | 150 | 1/5 | 5,5 |
| | 0,001 | 0,001 | 470 | 1 600 | 150 | 1/5 | 10,7 |

TABLEAU IV (suite)

| | % atomique Rh | % atomique Sb | T (°C) | P (bar) | durée (minutes) | Concentration C du $HClO_4$ aqueux | Champ coercitif (en kA/m) |
|---|---|---|---|---|---|---|---|
| | 0,005 | 0 | 400 | 2 000 | 100 | | 15,8 |
| B | 0 | 0,005 | 400 | 2 000 | 100 | | 15,8 |
| | 0,005 | 0,005 | 400 | 2 000 | 100 | | 19,3 |

TABLEAU V

Effet de synergie dans le cas d'un double dopage au tellure et au rhodium

| | % atomique Rh | % atomique Te | T (°C) | P (bar) | Durée (minutes) | Concentration C du $HClO_4$ aqueux | Champ coercitif (en kA/m) |
|---|---|---|---|---|---|---|---|
| | 0 | 0,01 | 460 | 1 600 | 120 | 1/5 | 10,0 |
| A | 0,01 | 0 | 460 | 1 600 | 120 | 1/5 | 18,3 |
| | 0,01 | 0,01 | 460 | 1 600 | 120 | 1/5 | 19,5 |
| | 0,004 | 0 | 410 | 2 000 | 60 | | 27,2 |
| B | 0 | 0,006 | 410 | 2 000 | 60 | | 27,2 |
| | 0,004 | 0,006 | 410 | 2 000 | 60 | | 29,0 |

TABLEAU VI

| N° | Masse de $NH_4ClO_4$ / Masse de $Cr_2O_3$ | % de Rh | Masse de $H_3BO_3$ / Masse de $NH_4ClO_4$ | T (°C) | P (bar) | Durée (minutes) | Hc (kA/m) |
|---|---|---|---|---|---|---|---|
| 1 | 1,5 | 0,1 % | 0 | 420 | 2 000 | 112 | 17,9 |
| 2 | 1,5 | 1 % | 0 | 380 | 2 000 | 60 | 29,4 |
| 3 | 1,5 | 0,1 % | 0,2 | 430 | 2 000 | 65 | 32,6 |
| 4 | 1,5 | 0,1 % | 0,2 | 420 | 2 000 | 85 | 35,4 |

TABLEAU VII

| Masse de $NH_4ClO_4$ / Masse de $Cr_2O_3$ | Masse de $H_3BO_3$ / Masse de $NH_4ClO_4$ | Masse de $(COOH)_2$ / Masse de $NH_4ClO_4$ | Fe (%) | Sb (%) | Te (%) | Sn (%) | Durée (minutes) | $H_C$ (kA/m) |
|---|---|---|---|---|---|---|---|---|
| 2,75 | 0,12 | | | | | | 90 | 27,2 |
| 2,75 | 0,11 | 0,05 | 1 | 1 | | | 120 | 32,3 |
| 2 | 0,12 | | 2 | | 2 | | 90 | 37,8 |
| 2,75 | 0,14 | 0,05 | 2 | 1 | | | 120 | 38,0 |
| 2,75 | 0,11 | 0,05 | 1 | 1 | | | 90 | 38,4 |
| 2,4 | 0,13 | 0,05 | 2 | 2 | | | 135 | 38,6 |
| 2,5 | 0,12 | 0,14 | 5 | 8 | | | 100 | 39,0 |
| 2,3 | 0,13 | | 2 | 2 | | 2 | 90 | 40,1 |

**Revendications**

1. Procédé pour l'obtention d'un composé ferromagnétique à base de dioxyde de chrome et de dioxyde de rhodium sous la forme d'une solution solide $Cr_{1-x}Rh_xO_2$, où x est un nombre compris entre 0 et 0,5, caractérisé en ce qu'il consiste, à une température d'au moins 350 °C et sous une pression d'au moins 400 bars, à oxyder du $Cr_2O_3$ hydraté ou anhydre ou un précurseur de $Cr_2O_3$, en présence (1) d'un

composé du rhodium III donnant *in situ* du $RhO_2$ dans les conditions de la réaction, et (2) d'un agent oxydant constitué par un composé oxygéné exempt des cations métalliques autres que le chrome et ne conduisant pas à la formation préférentielle ou parasite de chromates, de bichromates ou de tout autre composé du chrome à un degré d'oxydation supérieur à + IV, et ayant, dans les conditions de la réaction, une pression partielle d'oxygène au moins égale à celles qui correspondent, dans les mêmes conditions de température et de pression, aux équilibres $Cr_2O_3 + 1/2O_2 \rightleftharpoons 2CrO_2$ et $Rh_2O_3 + 1/2O_2 \rightleftharpoons 2RhO_2$, ainsi qu'éventuellement (3) d'eau de dilution et/ou d'au moins un agent dopant complémentaire agissant comme tampon du milieu réactionnel, et/ou d'au moins un agent modificateur classique.

2. Procédé selon la revendication 1, caractérisé en ce qu'on le met en œuvre à une température de 350 à 500 °C.

3. Procédé selon l'une des revendications 1 ou 2, caractérisé en ce qu'on met en œuvre un composé du rhodium III choisi parmi $Rh_2O_3$, $5H_2O$ et $RhCl_3$, $4H_2O$ ou tout autre hydrate de $RhCl_3$.

4. Procédé selon l'une quelconque des revendications 1 à 3, caractérisé en ce qu'on fixe le rapport *r* de la masse de chrome dans le produit de départ renfermant du chrome à la masse de rhodium dans la source de rhodium III entre 5 100 et 0,50.

5. Procédé selon l'une quelconque des revendications 1 à 4, caractérisé en ce qu'on met en œuvre comme oxydant un composé possédant un pouvoir oxydant suffisant pour oxyder, dans les conditions de la réaction, le Cr III en Cr IV et le Rh III en Rh IV, et exempt de cations métalliques susceptibles d'entraîner des réactions concurrentielles.

6. Procédé selon la revendication 5, caractérisé en ce qu'on met en œuvre un agent oxydant choisi parmi $HXO_y$, $zH_2O$, où X est Cl ou I, y est un entier positif inférieur ou égal à 4 et z est un nombre qui représente le nombre de molécules d'eau de dilution dudit oxydant si celui-ci n'existe qu'en solution ou dilution, et de cristallisation s'il est sous forme solide, soit en pratique un nombre variant de 3 à 40, et notamment $HClO_4$, $zH_2O$, où z est tel que défini ci-dessus, $HIO_3$ et $HIO_4$, $2H_2O$, ainsi que $HBrO_3$, $HNO_3$, $NH_4ClO_4$ et $Cr(IO_3)_3$, $x'H_2O$, où x' est un nombre, en pratique de 0 à 8, représentant le degré d'hydratation de l'iodate de chrome III.

7. Procédé selon la revendication 1, caractérisé en ce qu'on oxyde de l'oxyde de chrome III hydraté ($Cr_2O_3$, $x''H_2O$, dans lequel x" est un nombre variant de 1 à 6), et le composé du rhodium III, par de l'iodate de chrome III ($Cr(IO_3)_3$, $x'H_2O$ avec x' = 0 à 8), en présence d'eau, à une température comprise entre 490 et 540 °C et sous pression de 2 400 à 4 000 bars.

8. Procédé selon la revendication 1, caractérisé en ce qu'on oxyde de l'oxyde de chrome $Cr_2O_3$ anhydre et le composé du rhodium III dans une solution liquide aqueuse de $HClO_y$, avec y inférieur ou égal à 4, à une température supérieure à 350 °C et sous une pression supérieure à 400 bars.

9. Procédé selon la revendication 1, caractérisé en ce qu'on oxyde du $Cr_2O_3$, anhydre ou hydraté, et le composé du rhodium III, au moyen de perchlorate d'ammonium $NH_4ClO_4$ en présence d'eau, à une température supérieure à 350 °C et sous une pression supérieure à 500 bars environ.

10. Procédé selon l'une quelconque des revendications 3 à 6, caractérisé en ce qu'on prépare l'oxyde de chrome $Cr_2O_3$ anhydre par une décomposition thermique de bichromate d'ammonium, préalablement finement divisé au moyen d'une technique permettant l'obtention de particules fines de faibles dimensions, telle qu'un broyage, une pulvérisation ou une lyophilisation.

11. Procédé selon la revendication 10, caractérisé en ce qu'on oxyde le $Cr_2O_3$ anhydre ainsi formé et le composé du rhodium III, par une solution d'un agent oxydant de formule $HXO_y$ où X = Cl, Br, I ou N et y est un nombre entier inférieur ou égal à 4, selon les cas, à une température supérieure à 400 bars environ.

12. Procédé selon la revendication 10, caractérisé en ce qu'on oxyde le $Cr_2O_3$ anhydre ainsi formé et le composé du rhodium III, par du perchlorate d'ammonium $NH_4ClO_4$, à une température d'au moins 350 °C environ et sous une pression de l'ordre de 500 bars.

13. Procédé selon l'une des revendications 8 ou 11, caractérisé en ce que le milieu oxydant est une solution aqueuse d'acide perchlorique contenant de 20 à 22 % en poids d'acide pur.

14. Procédé selon la revendication 11, caractérisé en ce que le milieu oxydant est une solution aqueuse d'acide bromique contenant 15 à 20 % en poids d'acide pur.

15. Procédé selon la revendication 11, caractérisé en ce qu'on met en œuvre en tant que milieu oxydant une substance solide choisie parmi $HIO_3$ et $HIO_4$, $2H_2O$ et de l'eau de dilution, la masse d'eau utilisée représentant de 1 à 3 fois celle de l'agent oxydant dérivé de l'iode.

16. Procédé selon la revendication 7, caractérisé en ce que le rapport de la masse d'eau à la masse d'agent oxydant $Cr(IO_3)_3$, $x'H_2O$ (où x' est tel que précédemment défini) est compris entre 1,5 et 2.

17. Procédé selon l'une des revendications 9 ou 11, caractérisé en ce qu'on utilise une masse d'eau représentant environ 2 fois celle de l'agent oxydant $NH_4ClO_4$.

18. Procédé selon la revendication 11, caractérisé en ce qu'on met en œuvre une solution aqueuse de $HNO_3$ contenant de 15 à 100 % en poids d'acide pur.

19. Procédé selon la revendication 7, caractérisé en ce que le rapport du nombre total d'atomes de chrome et de rhodium contenus dans l'oxyde de chrome trivalent hydraté $Cr_2O_3$, $x''H_2O$, où x" est un nombre variant de 1 à 6, et dans la source de rhodium III, au nombre d'atomes de chromes contenus dans l'iodate de $Cr(IO_3)_3$, $x'H_2O$ où x' varie de 0 à 8, est compris entre 5 et 6.

20. Procédé selon l'une des revendications 8 ou 11, caractérisé en ce que la masse de solution oxydante qui est une solution aqueuse de l'acide perchlorique (ramenée à 33 % en poids d'acide pur)

représente au moins 1,4 fois la masse de l'ensemble du chrome contenu dans l'oxyde de chrome anhydre $Cr_2O_3$ et du rhodium contenu dans la source de Rh III.

21. Procédé selon l'une des revendications 11 ou 15, caractérisé en ce qu'on utilise de l'acide iodique $HIO_3$, en une quantité telle que la masse de $HIO_3$ représente de 1 à 3 fois l'ensemble de la masse de chrome contenue dans le bichromate d'ammonium et de la masse de rhodium contenue dans la source Rh III.

22. Procédé selon l'une des revendications 11 ou 15, caractérisé en ce qu'on utilise de l'acide periodique $HIO_4$, $2H_2O$, en une quantité telle que la masse de cet $HIO_4$, $2H_2O$, en une quantité telle que la masse de cet $HIO_4$, $2H_2O$ représente environ 3 fois l'ensemble de la masse de chrome contenue dans le bichromate d'ammonium et de la masse de rhodium contenue dans la source de Rh III.

23. Procédé selon la revendication 18, caractérisé en ce que la masse de solution d'acide nitrique mise en œuvre représente au moins 3 fois l'ensemble de la masse de chrome contenue dans le bichromate d'ammonium et de la masse de rhodium contenue dans la source de Rh III.

24. Procédé selon l'une des revendications 9 ou 12, caractérisé en ce que la masse de perchlorate utilisée représente au moins 2,4 fois environ l'ensemble de la masse de chrome contenue dans la source de chrome et de la masse de rhodium contenue dans la source de Rh III.

25. Procédé selon la revendication 7, caractérisé en ce qu'on conduit la réaction sous une pression d'environ 3 000 bars.

26. Procédé selon l'une des revendications 9 ou 11, caractérisé en ce qu'on conduit la réaction sous une pression d'environ 500 bars.

27. Procédé selon l'une quelconque des revendications 1 à 3, caractérisé en ce qu'il comprend la mise en œuvre concomitante d'au moins un agent dopant complémentaire agissant comme tampon du milieu réactionnel.

28. Procédé selon la revendication 27, caractérisé en ce que les agents dopants complémentaires sont des composés aptes à s'adsorber sur les cristaux en formation et à en ralentir la croissance.

29. Procédé selon l'une des revendications 27 ou 28, caractérisé en ce que l'agent dopant complémentaire comprend de l'acide borique, de l'acide oxalique ou leurs mélanges.

30. Procédé selon l'une quelconque des revendications 27 à 29, caractérisé en ce que le rapport de la masse d'agent dopant complémentaire à la masse d'agent oxydant mis en œuvre dans la réaction est compris entre 0,03 et 0,60.

31. Procédé selon la revendication 29, caractérisé en ce que l'agent dopant complémentaire est l'acide borique, l'agent oxydant mis en œuvre dans la réaction est le perchlorate d'ammonium, et le rapport en masse du premier au second est voisin de 0,13.

32. Procédé selon la revendication 29, caractérisé en ce que l'agent dopant complémentaire comprend de l'acide oxalique dans une proportion telle que le rapport de la masse d'acide oxalique à la masse d'agent oxydant soit compris entre 0,03 et 0,20, l'agent oxydant étant alors essentiellement du perchlorate d'ammonium.

33. Procédé selon la revendication 27, caractérisé en ce qu'on utilise en outre au moins un agent dopant complémentaire choisi parmi les éléments Fe, Te, Sn ou des mélanges de ceux-ci.

34. Matériau ferromagnétique, caractérisé en ce qu'il est composé de dioxyde de chrome et de dioxyde de rhodium et d'un agent modificateur éventuel, et se présente sous forme d'une solution solide de formule générale $Cr_{1-x}Rh_xO_2$, où x est un nombre compris entre 0 et 0,5.

35. Produit selon la revendication 34, caractérisé en ce que x est un nombre d'au plus environ 0,01 et plus avantageusement d'environ 0,001.

36. Produit selon la revendication 34, caractérisé en ce qu'il comprend en outre au moins un autre agent modificateur classique, notamment choisi parmi les éléments Fe, Sb, Te, Sn ou des mélanges de ceux-ci.

37. Eléments d'enregistrement magnétique, caractérisés en ce qu'ils comprennent essentiellement un support en matière non magnétique comportant comme matériau magnétiquement sensible un produit selon l'une quelconque des revendications 34 à 36.

**Claims**

1. Process for obtaining a ferromagnetic compound based on chromium dioxide and rhodium dioxide in the form of a solid solution $Cr_{1-x}Rh_xO_2$, where x is a number between 0 and 0.5, characterised in that it comprises oxidising, at a temperature of at least 350 °C and under a pressure of at least 400 bars, hydrated or anhydrous $Cr_2O_3$ or a precursor of $Cr_2O_3$, in the presence (1) of a rhodium compound III which *in situ* produces $RhO_2$ under the conditions of the reaction, and (2) an oxidising agent which consists of an oxygen-containing compound which is free from metal cations other than chromium and does not cause the preferential formation or side-reaction formation of chromates, bichromates or any other chromium compound having a degree of oxidation greater than + IV and which, under the conditions of the reaction, has a partial oxygen pressure at least equal to those which correspond, under the same temperature and pressure conditions, to the equilibria $Cr_2O_3 + 1/2O_2 \rightleftharpoons 2CrO_2$ and $Rh_2O_3 + 1/2O_2 \rightleftharpoons 2RhO_2$, with or without (3) water of dilution and/or at least one supplementary

doping agent acting as a buffer for the reaction medium, and/or at least one conventional modifier.

2. Process according to Claim 1, characterised in that it is carried out at a temperature of 350 to 500 °C.

3. Process according to one of Claims 1 or 2, characterised in that a rhodium III compound chosen from amongst $Rh_2O_3 \cdot 5H_2O$ and $RhCl_3 \cdot 4H_2O$ or any other hydrate of $RhCl_3$ is employed.

4. Process according to any one of Claims 1 to 3, characterised in that the ratio *r* of the weight of chromium in the starting material containing chromium to the weight of rhodium in the source of rhodium III is chosen to be between 5,100 and 0,50.

5. Process according to any one of Claims 1 to 4, characterised in that the oxidising agent employed is a compound having a sufficient oxidising power to oxidise Cr III to Cr IV and Rh III to Rh IV under the conditions of the reaction and is free from metal cations which can bring about competing side-reactions.

6. Process according to Claim 5, characterised in that the oxidising agent employed is chosen from amongst $HXO_y \cdot zH_2O$, where X is Cl or I, y is a positive integer less than or equal to 4 and z is a number which represents the number of molecules of water of dilution of the said oxidising agent if the latter exists only in solution or dilution, or the number of molecules of water of crystallisation if the oxidising agent is in a solid form, in practice a number varying from 3 to 40, and especially $HClO_4 \cdot zH_2O$, where z is as defined above, $HIO_3$ and $HIO_4 \cdot 2H_2O$, as well as $HBrO_3$, $HNO_3$, $NH_4ClO_4$ and $Cr(IO_3)_3 \cdot x'H_2O$, where x' is a number, in practice from 0 to 8, which represents the degree of hydration of the chromium iodate III.

7. Process according to Claim 1, characterised in that hydrated chromium III oxide ($Cr_2O_3 \cdot x''H_2O$, in which x" is a number varying from 1 to 6) and the rhodium III compound are oxidised by means of chromium III iodate ($(Cr(IO)_3)_3 \cdot x'H_2O$, with $x' = 0$ to 8), in the presence of water, at a temperature of between 490 and 540 °C and under a pressure of 2,400 to 4,000 bars.

8. Process according to Claim 1, characterised in that anhydrous chromium oxide $Cr_2O_3$ and the rhodium III compound are oxidised in an aqueous liquid solution of $HClO_y$, with y less than or equal to 4, at a temperature above 350 °C and under a pressure greater than 400 bars.

9. Process according to Claim 1, characterised in that anhydrous or hydrated $Cr_2O_3$ and the rhodium III compound are oxidised by means of ammonium perchlorate $NH_4ClO_4$ in the presence of water at a temperature above 350 °C and under a pressure greater than about 500 bars.

10. Process according to any one of Claims 3 to 6, characterised in that the anhydrous chromium oxide $Cr_2O_3$ is prepared by a thermal decomposition of ammonium bichromate which has beforehand been finely divided by means of a technique which makes it possible to obtain fine particles of small size, such as grinding, pulverisation or freeze-drying.

11. Process according to Claim 10, characterised in that the anhydrous $Cr_2O_3$ thus formed and the rhodium III compound are oxidised with a solution of an oxidising agent of the formula HXOy, where X is Cl, Br, I or N and y is an integer less than or equal to 4, depending on the particular case, at a temperature above 360 °C and under a pressure greater than about 400 bars.

12. Process according to Claim 10, characterised in that the anhydrous $Cr_2O_3$ thus formed and the rhodium III compound are oxidised with ammonium perchlorate $NH_4ClO_4$ at a temperature of at least about 350 °C and under a pressure of the order of 500 bars.

13. Process according to one of Claims 8 to 11, characterised in that the oxidising medium in an aqueous solution of perchloric acid containing from 20 to 22 % by weight of pure acid.

14. Process according to Claim 11, characterised in that the oxidising medium in an aqueous bromic acid solution containing 15 to 20 % by weight of pure acid.

15. Process according to Claim 11, characterised in that a solid substance chosen from amongst $HIO_3$ and $HIO_4 \cdot 2H_2O$, together with water of dilution, is used as the oxidising medium, the weight of water used representing from 1 to 3 times the weight of the oxidising agent derived from iodine.

16. Process according to Claim 7, characterised in that the ratio of the weight of water to the weight of oxidising agent $Cr(IO_3)_3 \cdot x'H_2O$ (where x' is as defined above) is between 1.5 and 2.

17. Process according to one of Claims 9 or 11, characterised in that a weight of water representing about twice the weight of the oxidising agent $NH_4ClO_4$ is used.

18. Process according to Claim 11, characterised in that an aqueous $HNO_3$ solution containing from 15 to 100 % by weight of pure acid is employed.

19. Process according to Claim 7, characterised in that the ratio of the total number of chromium atoms and rhodium atoms contained in the hydrated trivalent chromium oxide $Cr_2O_3 \cdot x''H_2O$, where x" is a number varying from 1 to 6, and in the source of rhodium III, to the number of chromium atoms contained in the Cr iodate, $Cr(IO_3)_3$. $x'H_2O$, where x' varies from 0 to 8, is between 5 and 6.

20. Process according to one of Claims 8 or 11, characterised in that the weight of oxidising solution, the latter being an aqueous solution of perchloric acid (brought to 33 % by weight of pure acid) represents at least 1.4 times the weight of the total of the chromium contained in the anhydrous chromium oxide $Cr_2O_3$ and of the rhodium contained in the source of Rh III.

21. Process according to one of Claims 11 or 15, characterised in that iodic acid $HIO_3$ is used in an amount such that the weight of $HIO_3$ represents from 1 to 3 times the total of the weight of chromium contained in the ammonium bichromate and the weight of rhodium contained in the source of Rh III.

22. Process according to one of Claims 11 or 15, characterised in that periodic acid $HIO_4 \cdot 2H_2O$ is

used in an amount such that the weight of this $HIO_4 \cdot 2H_2O$ represents about 3 times the total of the weight of chromium contained in the ammonium bichromate and the weight of rhodium contained in the source of Rh III.

23. Process according to Claim 18, characterised in that the weight of nitric acid solution employed represents at least 3 times the total of the weight of chromium contained in the ammonium bichromate and the weight of rhodium contained in the source of Rh III.

24. Process according to one of Claims 9 or 12, characterised in that the weight of perchlorate used represents at least about 2.4 times the total of the weight of chromium contained in the source of chromium and the weight of rhodium contained in the source of Rh III.

25. Process according to Claim 7, characterised in that the reaction is carried out under a pressure of about 3,000 bars.

26. Process according to one of Claims 9 or 11, characterised in that the reaction is carried out under a pressure of about 500 bars.

27. Process according to any one of Claims 1 to 3, characterised in that it comprises the concomitant use of at least one supplementary doping agent acting as a buffer for the reaction medium.

28. Process according to Claim 27, characterised in that the supplementary doping agents are compounds capable of becoming adsorbed on the crystals being formed, and of slowing down the growth of these.

29. Process according to one of Claims 27 or 28, characterised in that the supplementary doping agent comprises boric acid, oxalic acid or mixtures of these.

30. Process according to any one of Claims 27 to 29, characterised in that the ratio of the weight of supplementary doping agent to the weight of oxidising agent employed in the reaction is between 0.03 and 0.60.

31. Process according to Claim 29, characterised in that the supplementary doping agent is boric acid, the oxidising agent employed in the reaction is ammonium perchlorate and the ratio of the weight of the former to the weight of the latter is about 0.13.

32. Process according to Claim 29, characterised in that the supplementary doping agent comprises oxalic acid in a proportion such that the ratio of the weight of oxalic acid to the weight of oxidising agent is between 0.03 and 0.20, the oxidising agent being essentially ammonium perchlorate.

33. Process according to Claim 27, characterised in that additionally at least one supplementary doping agent chosen from amongst the elements Fe, Te and Sn or mixtures of these is used.

34. Ferromagnetic material, characterised in that it is composed of chromium dioxide and rhodium dioxide and an optional modifier, and is in the form of a solid solution of the general formula $Cr_{1-x}Rh_xO_2$, where x is a number between 0 and 0.5.

35. Product according to Claim 34, characterised in that x is a number which is at most about 0.01 and more advantageously about 0.001.

36. Product according to Claim 34, characterised in that it furthermore comprises at least one other conventional modifier, in particular chosen from amongst the elements Fe, Sb, Te and Sn or mixtures of these.

37. Magnetic recording elements, characterised in that they essentially comprise a base made of a non-magnetic material, possessing, as the magnetically sensitive material, a product according to any one of Claims 34 to 36.

## Ansprüche

1. Verfahren zur Herstellung einer ferromagnetischen Verbindung auf der Basis von Chromdioxid und Rhodiumdioxid in der Form einer festen Lösung $Cr_{1-x}Rh_xO_2$, worin x eine Zahl zwischen 0 und 0,5 bedeutet, dadurch gekennzeichnet, daß bei einer Temperatur von wenigstens 350 °C und bei einem Druck von wenigstens 400 bar hydratisiertes oder wasserfreies $Cr_2O_3$ oder ein Vorläufer von $Cr_2O_3$ in Gegenwart (1) einer Rhodium-III-Verbindung, die bei den Bedingungen der Umsetzung in situ $RhO_2$ ergibt, und (2) eines Oxidationsmittels, welches aus einer sauerstoffhaltigen Verbindung besteht, die frei von anderen Metallkationen als Chrom ist und nicht zu einer bevorzugten oder störenden Bildung von Chromaten, Bichromaten oder irgendeiner anderen Chromverbindung mit einem Oxidationsgrad über +IV führt, und unter den Bedingungen der Umsetzung einen Sauerstoffpartialdruck mindestens gleich dem besitzt, der unter den gleichen Temperatur- und Druckbedingungen den Gleichgewichten $Cr_2O_3 + 1/2O_2 \rightleftharpoons 2CrO_2$ und $Rh_2O_3 + 1/2O_2 \rightleftharpoons 2RhO_2$ entspricht, und gegebenenfalls (3) von Verdünnungswasser und/oder wenigstens eines ergänzenden Dotiermittels, das als Puffer des Reaktionsmediums wirkt, und/oder wenigstens eines üblichen Modifiziermittels oxidiert wird.

2. Verfahren nach Anspruch 1, dadurch gekennzeichnet, daß man bei einer Temperatur von 350 bis 550 °C arbeitet.

3. Verfahren nach einem der Ansprüche 1 oder 2, dadurch gekennzeichnet, daß man eine Rhodium-III-Verbindung verwendet, die unter den Verbindungen $Rh_2O_3 \cdot 5H_2O$ und $RhCl_3 \cdot 4H_2O$ oder irgendeinem anderen Hydrat von $RhCl_3$ ausgewählt wird.

4. Verfahren nach einem der Ansprüche 1 bis 3, dadurch gekennzeichnet, daß man das Verhältnis *r*

der Chrommenge in dem chromhaltigen Ausgangsprodukt zu der Rhodiummenge in der Rhodium-III-Quelle zwischen 5100 und 0,50 festlegt.

5. Verfahren nach einem der Ansprüche 1 bis 4, dadurch gekennzeichnet, daß man als Oxidationsmittel eine Verbindung verwendet, die eine ausreichende Oxidationskraft besitzt, unter den Bedingungen der Umsetzung das $Cr^{III}$ zu $Cr^{IV}$ und das $Rh^{III}$ zu $Rh^{IV}$ zu oxidieren, und die frei von Metallkationen ist, welche in der Lage sind, zu störenden Konkurrenzreaktionen zu führen.

6. Verfahren nach Anspruch 5, dadurch gekennzeichet, daß man ein Oxidationsmittel verwendet, das unter den Verbindungen $HXO_y \cdot zH_2O$ ausgewählt wird, worin X Cl oder I bedeutet, y eine positive ganze Zahl kleiner als oder gleich 4 bedeutet und z eine Zahl ist, die die Zahl der Verdünnungswassermoleküle dieses Oxidationsmittels bedeutet, wenn dieses nur in Lösung oder Verdünnung vorliegt, und die Zahl der Kristallwassermoleküle dieses Oxidationsmittels bedeutet, wenn es in fester Form vorliegt, wobei diese Zahl in der Praxis zwischen 3 und 40 variiert, und das Oxidationsmittel besonders $HClO_4 \cdot zH_2O$, worin z wie oben definiert ist, $HIO_3$ und $HIO_4 \cdot 2H_2O$ sowie $HBrO_3$, $HNO_3$, $NH_4ClO_4$ oder $Cr(IO_3)_3 \cdot x'H_2O$ ist, worin x' den Hydratationsgrad von Chrom-III-jodat bedeutet und in der Praxis 0 bis 8 ist.

7. Verfahren nach Anspruch 1, dadurch gekennzeichnet, daß man das hydratisierte Chrom-III-oxid ($Cr_2O_3 \cdot x''H_2O$, worin x" eine von 1 bis 6 variierende Zahl bedeutet) und die Rhodium-III-Verbindung mit Chrom-III-jodat ($Cr(IO_3)_3 \cdot x'H_2O$, worin $x' = 0$ bis 8 bedeutet) in Gegenwart von Wasser bei einer Temperatur von zwischen 490 und 540 °C und bei einem Druck von 2 400 bis 4 000 bar oxidiert.

8. Verfahren nach Anspruch 1, dadurch gekennzeichnet, daß man das wasserfreie Chromoxid $Cr_2O_3$ und die Rhodium-III-Verbindung in einer flüssigen wäßrigen Lösung von $HClO_y$, worin y kleiner als oder gleich 4 ist, bei einer Temperatur oberhalb 350 °C und bei einem Druck oberhalb 400 bar oxidiert.

9. Verfahren nach Anspruch 1, dadurch gekennzeichnet, daß man wasserfreies oder hydratisiertes $Cr_2O_3$ und die Rhodium-III-Verbindung mit Hilfe von Ammoniumperchlorat $NH_4ClO_4$ in Gegenwart von Wasser bei einer Temperatur oberhalb 350 °C und bei einem Druck oberhalb 500 bar oxidiert.

10. Verfahren nach einem der Ansprüche 3 bis 6, dadurch gekennzeichnet, daß man das wasserfreie Chromoxid $Cr_2O_3$ durch thermische Zersetzung von Ammoniumbichromat, das vorher mit einer Methode, die für die Gewinnung feiner Teilchen kleiner Abmessungen geeignet ist, wie Zermahlen, Pulverisieren oder Lyophilisierung, fein zerteilt wurde, herstellt.

11. Verfahren nach Anspruch 10, dadurch gekennzeichnet, daß man das so gebildete wasserfreie Oxid $Cr_2O_3$ und die Rhodium-III-Verbindung mit einer Lösung eines Oxidationsmittels der Formel $HXO_y$, worin je nachdem X Cl, Br, I oder N bedeutet und y eine ganze Zahl kleiner als oder gleich 4 bedeutet, bei einer Temperatur oberhalb 360 °C und bei einem Druck oberhalb 400 bar oxidiert.

12. Verfahren nach Anspruch 10, dadurch gekennzeichnet, daß man das so gebildete wasserfreie $Cr_2O_3$ und die Rhodium-III-Verbindung durch Ammoniumperchlorat $NH_4ClO_4$ bei einer Temperatur von wenigstens etwa 350 °C und bei einem Druck in der Größenordnung von 500 bar oxidiert.

13. Verfahren nach einem der Ansprüche 8 oder 11, dadurch gekennzeichnet, daß man als oxidierendes Medium eine wäßrige Perchlorsäurelösung verwendet, die 20 bis 22 Gewichts-% reine Säure enthält.

14. Verfahren nach Anspruch 11, dadurch gekennzeichnet, daß das oxidierende Medium eine wäßrige Lösung von Bromsäure mit einem Gehalt von 15 bis 20 Gewichts-% reiner Säure ist.

15. Verfahren nach Anspruch 11, dadurch gekennzeichnet, daß man als das oxidierende Medium eine feste Substanz, die unter den Verbindungen $HIO_3$ und $HIO_4 \cdot 2H_2O$ ausgewählt ist, und Verdünnungswasser verwendet, wobei die benutzte Wassermenge das 1- bis 3fache der Menge des sich von Jod herleitenden Oxidationsmittels ausmacht.

16. Verfahren nach Anspruch 7, dadurch gekennzeichnet, daß das Verhältnis der Wassermenge zu der Menge des Oxidationsmittels $Cr(IO_3)_3 \cdot x'H_2O$ (worin x' wie oben definiert ist) zwischen 1,5 und 2 liegt.

17. Verfahren nach einem der Ansprüche 9 oder 11, dadurch gekennzeichnet, daß man eine Wassermenge verwendet, die etwa das 2fache der Menge des Oxidationsmittels $NH_4ClO_4$ ausmacht.

18. Verfahren nach Anspruch 11, dadurch gekennzeichnet, daß man eine wäßrige Lösung von $HNO_3$ verwendet, die 15 bis 100 Gewichts-% reine Säure enthält.

19. Verfahren nach Anspruch 7, dadurch gekennzeichnet, daß das Verhältnis der Gesamtzahl der Chromatome und der Rhodiumatome in dem hydratisierten Oxid von dreiwertigem Chrom $Cr_2O_3 \cdot x''H_2O$, worin x" eine von 1 bis 6 variierende Zahl ist, und in der Rhodium-III-Quelle zu der Zahl der Chromatome in dem Jodat $Cr(IO_3)_3 \cdot x'H_2O$, worin x' zwischen 0 und 8 variiert, zwischen 5 und 6 liegt.

20. Verfahren nach einem der Ansprüche 8 oder 11, dadurch gekennzeichnet, daß die Menge der Oxidationsmittellösung, die eine wäßrige Lösung von Perchlorsäure ist (zurückzuführen auf 33 Gewichts-% reine Säure), wenigstens das 1,4fache der Menge der Gesamtheit von Chrom in dem wasserfreien Chromoxid $Cr_2O_3$ und Rhodium in der Rh-III-Quelle ausmacht.

21. Verfahren nach einem der Ansprüche 11 oder 15, dadurch gekennzeichnet, daß man die Jodsäure $HIO_3$ in einer solchen Menge verwendet, daß die Menge an $HIO_3$ das 1- bis 3fache der Gesamtheit der Chrommenge in dem Ammoniumbichromat und der Rhodiummenge in der benutzten Rh-III-Quelle ausmacht.

22. Verfahren nach einem der Ansprüche 11 oder 15, dadurch gekennzeichnet, daß man die

Perjodsäure $HIO_4 \cdot 2H_2O$ in solcher Menge verwendet, daß die Menge dieser $HIO_4 \cdot 2H_2O$ etwa das 3fache der Gesamtheit der Chrommenge in dem Ammoniumbichromat und der Rhodiummenge in der verwendeten Rh-III-Quelle ausmacht.

23. Verfahren nach Anspruch 18, dadurch gekennzeichnet, daß die Menge der verwendeten Salpetersäurelösung wenigstens das 3fache der Gesamtheit der Chrommenge in dem Ammoniumbichromat und der Rhodiummenge in der Rh-III-Quelle ausmacht.

24. Verfahren nach einem der Ansprüche 9 oder 12, dadurch gekennzeichnet, daß die benutzte Perchloratmenge wenigstens das 2,4fache der Gesamtheit der Chrommenge in der Chromquelle und der Rhodiummenge in der Rh-III-Quelle ausmacht.

25. Verfahren nach Anspruch 7, dadurch gekennzeichnet, daß man die Umsetzung bei einem Druck von etwa 3000 bar durchführt.

26. Verfahren nach einem der Ansprüche 9 oder 11, dadurch gekennzeichnet, daß man die Umsetzung bei einem Druck von etwa 500 bar durchführt.

27. Verfahren nach einem der Ansprüche 1 bis 3, dadurch gekennzeichnet, daß man gleichzeitig wenigstens ein ergänzendes Dotiermittel verwendet, das als Puffer des Reaktionsmediums wirkt.

28. Verfahren nach Anspruch 27, dadurch gekennzeichnet, daß die ergänzenden Dotiermittel Verbindungen sind, die fähig sind, sich auf den Kristallen bei deren Bildung zu absorbieren und ihr Wachstum zu verlangsamen.

29. Verfahren nach einem der Ansprüche 27 oder 28, dadurch gekennzeichnet, daß das ergänzende Dotiermittel Borsäure, Oxalsäure oder deren Gemische umfaßt.

30. Verfahren nach einem der Ansprüche 27 bis 29, dadurch gekennzeichnet, daß das Verhältnis der Menge des ergänzenden Dotiermittels zu der Menge des in der Umsetzung benutzten Oxidationsmittels zwischen 0,03 und 0,60 liegt.

31. Verfahren nach Anspruch 29, dadurch gekennzeichnet, daß das ergänzende Dotiermittel Borsäure, das in der Umsetzung verwendete Oxidationsmittel Ammoniumperchlorat und das Verhältnis der Menge von ersterem zu der Menge von letzterem etwa 0,13 ist.

32. Verfahren nach Anspruch 29, dadurch gekennzeichnet, daß das ergänzende Dotiermittel so viel Oxalsäure umfaßt, daß das Verhältnis der Oxalsäuremenge zu der Oxidationsmittelmenge zwischen 0,03 und 0,20 liegt, wobei das Oxidationsmittel dann im wesentlichen aus Ammoniumperchlorat besteht.

33. Verfahren nach Anspruch 27, dadurch gekennzeichnet, daß man außerdem auch wenigstens ein ergänzendes Dotiermittel verwendet, das unter den Elementen Fe, Te, Sn oder Gemischen derselben ausgewählt ist.

34. Ferromagnetisches Material, dadurch gekennzeichnet, daß es aus Chromdioxid und Rhodiumdioxid und gegebenenfalls einem Modifiziermittel besteht und in der Form einer festen Lösung der allgemeinen Formel $Cr_{1-x}Rh_xO_2$ vorliegt, worin x eine Zahl zwischen 0 und 0,5 ist.

35. Material nach Anspruch 34, dadurch gekennzeichnet, daß x eine Zahl von höchstens etwa 0,01 und stärker bevorzugt etwa 0,001 bedeutet.

36. Material nach Anspruch 34, dadurch gekennzeichnet, daß es außerdem wenigstens ein anderes übliches Modifiziermittel enthält, insbesondere ein solches, das unter den Elementen Fe, Sb, Te, Sn oder Gemischen dieser Elemente ausgewählt ist.

37. Magnetisches Aufzeichnungselement, dadurch gekennzeichnet, daß es im wesentlichen einen Träger aus einem nichtmagnetischen Material umfaßt, der als magnetisch empfindliches Material ein Produkt nach einem der Ansprüche 34 bis 36 aufweist.